# EUROPÄISCHE PATENTANMELDUNG

(11) **EP 3 716 382 A1**
(43) Veröffentlichungstag der Anmeldung: **30.09.2020**
(21) Anmeldenummer: 20163694.1
(22) Anmeldetag: 17.03.2020
(51) Int. Cl.: H01M 8/04119, H01M 8/0662, F16T 1/00, B64D 41/00, H01M 8/1018

(54) **WASSERABSCHEIDER FÜR EIN BRENNSTOFFZELLENSYSTEM**

(30) Priorität: 28.03.2019 DE 102019108088
(71) Anmelder: Airbus Operations GmbH, 21129 Hamburg (DE)
(72) Erfinder: Wolff, Christian, 21129 Hamburg (DE); Kurre, Jens-Dietrich, 21129 Hamburg (DE)
(74) Vertreter: LKGLOBAL Lorenz & Kopf PartG mbB Patentanwälte

(57) **Zusammenfassung**

Es wird ein Wasserabscheider (2) für ein Brennstoffzellensystem vorgeschlagen, aufweisend ein geschlossenes Gehäuse (4) mit einem Gasanschluss (6) und einer vom Gasanschluss (6) abgewandt angeordneten Bodenplatte (8) mit einem Ablauf (28), wobei sich eine lichte Weite des Gehäuses (4) von der Bodenplatte (8) zu dem Gasanschluss (6) hin zumindest abschnittsweise verringert und wobei die Höhe des Gehäuses die größte lichte Weite des Gehäuses unterschreitet.

## Beschreibung

### TECHNISCHES GEBIET

Die Erfindung betrifft einen Wasserabscheider für ein Brennstoffzellensystem, ein Brennstoffzellensystem mit einem derartigen Wasserabscheider sowie ein Fahrzeug mit einem Brennstoffzellensystem und einem derartigen Wasserabscheider.

### HINTERGRUND DER ERFINDUNG

Beim Betrieb von Brennstoffzellen fällt als Nebenprodukt stets Wasser in Form von Wasserdampf an. Es empfiehlt sich, insbesondere bei der Verwendung einer Brennstoffzelle in einem Flugzeug aus Gewichts- und Wirtschaftlichkeitsgründen das Wasser abzuscheiden und anderen Verbrauchern zuzuführen. Es sind längliche, im Wesentlichen zylindrische, dosenförmige Wasserabscheider bekannt, die mit einer Abgas- oder Rezirkulationsleitung einer Brennstoffzelle in Fluidverbindung stehen. Aufgrund eines relativ hohen Druckniveaus eines in der Abgas- oder Rezirkulationsleitung strömenden Gas-Wasserdampf-Gemischs kann dieses übersättigt sein, so dass Wasser ohne viel Aufwand in den Wasserabscheider "fällt". Andernfalls kann die Abgas- oder Rezirkulationsleitung gekühlt werden, so dass Wasserdampf auskondensiert wird. Es sammelt sich dadurch kontinuierlich an und kann dem Wasserabscheider beispielsweise periodisch über einen Ablauf wieder entnommen werden. Hierzu kann ein Füllstandssensor eingesetzt werden, der das Erreichen eines vorgesehenen maximalen Füllstandes erfasst und das Öffnen eines Ablaufs initiiert. Es sollte dabei beachtet werden, dass stets eine Restmenge an Wasser vorliegt, so dass das Gas-Wasserdampf-Gemisch nicht aus dem Ablauf austreten kann. Aus diesem Grunde ist eine bestimmte Bauhöhe sinnvoll.

DE102010052839A1 offenbart ein Brennstoffzellensystem zur Erzeugung von elektrischer Energie und Wasser zum Einsatz an Bord eines Flugzeugs, bei dem ein Wassertank mit Wasser aus einem mit dem Brennstoffzellensystem gekoppelten Wasserabscheider versorgt wird.

### ZUSAMMENFASSUNG DER ERFINDUNG

Bei der Realisierung leistungsstarker Brennstoffzellen in Flugzeugen können größere Mengen an Wasser anfallen, die abzuführen sind. Gleichzeitig ist jedoch auch der vorhandene Bauraum nicht unbegrenzt, so dass besonders für dosenartige Wasserabscheider mit einem ausreichenden Fassungsvermögen eine entsprechende Bauhöhe nicht vorhanden ist.

Es ist folglich eine Aufgabe der Erfindung, einen Wasserabscheider für ein Brennstoffzellensystem vorzuschlagen, der eine möglichst geringe Bauhöhe aufweist, dennoch ein ausreichendes Volumen. Es sollte sichergestellt werden, dass nicht das gesamte Wasser aus dem Wasserabscheider austritt und dabei zum ungewünschten Austreten des Wasserdampf enthaltenden Gases führt.

Die Aufgabe wird gelöst durch einen Wasserabscheider mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Wasserabscheider für ein Brennstoffzellensystem vorgeschlagen, aufweisend ein geschlossenes Gehäuse mit einem Gasanschluss und einer vom Gasanschluss abgewandt angeordneten Bodenplatte mit einem Ablauf, wobei sich eine lichte Weite des Gehäuses von der Bodenplatte zu dem Gasanschluss hin zumindest abschnittsweise verringert und wobei die Höhe des Gehäuses die größte lichte Weite des Gehäuses unterschreitet.

Die lichte Weite des Gehäuses kann sich in zumindest einem Abschnitt, oder alternativ auch kontinuierlich verringern. Dabei kann sich der Wasserabscheider auch an die Geometrie des Einbauraumes anpassen ("conformal tank"). Es ist vorstellbar, dass sich die lichte Weite um zumindest ein Viertel verringert. Es ist weiter vorstellbar, dass die Höhe des Gehäuses höchstens der Hälfte der größten lichten Weite entspricht.

Der erfindungsgemäße Wasserabscheider ist folglich mit einer deutlich flacheren Bauform ausgestattet, als die vorangehend genannten, weitgehend dosenförmig ausgebildeten, üblichen Wasserabscheider. Aufgrund der relativ hohen lichten Weite im Vergleich zu der Bauhöhe ergibt sich folglich ein sehr flacher Aufbau des Wasserabscheiders, dessen Gehäusevolumen sich von der Bodenplatte zu dem Gasanschluss hin erstreckt und sich weiterhin in dieser Richtung verjüngt. Durch die Verjüngung steigt die Geschwindigkeit des Pegelanstiegs mit zunehmender Wassermenge an. Bei kontinuierlicher, gleichmäßiger Befüllung des Gehäuses steigt der Pegel folglich immer schneller, wenn der sich verjüngende Bereich erreicht und gefüllt wird. Durch eine entsprechende Platzierung eines Pegelsensors in dem sich verjüngenden Bereich kann folglich sehr zuverlässig eine vorbestimmte Wassermenge aufgelöst und detektiert werden. Dies erlaubt, einen präzisen Startzeitpunkt für einen Wasserabfuhrvorgang zu bestimmen. Eine Entnahme des Wassers an der Bodenplatte durch den Ablauf führt zunächst zu einem raschen und dann langsamer werdenden Sinken des Pegels. Im Bereich der Bodenplatte sinkt der Pegel am langsamsten. Es ist sinnvoll, eine Zeitsteuerung zum Abbrechen des Wasserabfuhrprozesses derart einzustellen, dass noch eine Restmenge an Wasser verbleibt, die den Ablauf bedeckt. Durch die geringe Pegelgeschwindigkeit in der Nähe der Bodenplatte kann ein nach der Wasserabfuhr verbleibender Restpegel über die Vorgabe einer Zeitdauer sehr gut eingestellt werden.

Der Gasanschluss des Wasserabscheiders könnte mit einem Kathodenauslass oder einem Anodenauslass eines Brennstoffzellensystems in Fluidverbindung stehen. Ebenso könnte der Gasanschluss mit einer Gasrezirkulationsleitung der Anode oder Kathode in Verbindung stehen. Das Gas ist druckbeaufschlagt und kann mit Wasserdampf übersättigt sein.

Es könnte ein einzelner Gasanschluss ausreichen, um eine Wasserabscheidung zu erreichen. Der Wasserabscheider könnte dann den tiefsten Punkt an einer Anoden- oder Kathodenabgasleitung bilden oder stromaufwärts einer Rezirkulationsleitung angeordnet sein, so dass Wasser in den Wasserabscheider "fällt". Die Abgas- oder die Rezirkulationsleitungen können zusätzlich auch gekühlt sein, um die Wasserdampfkondensation/ Wasserabscheidung zu erhöhen. Dann könnte der Gasanschluss einen möglichst großen Querschnitt aufweisen. Allerdings ist auch denkbar, einen separaten Gaseingang und einen separaten Gasausgang vorzusehen, die zum Einleiten und Ausleiten von Gas verwendbar sind. Der Wasserabscheider stellt in beiden Fällen ein geschlossenes Volumen bereit, in dem sich eine ein- oder durchtretende Gasströmung beruhigen kann, während die darin enthaltenen Wassertröpfchen abgeschieden werden und sich im Wasserabscheider sammeln können.

Der Ablauf kann eine Öffnung in der Bodenplatte sein. Die Bodenplatte könnte an einer die Öffnung aufweisenden Stelle eine Vertiefung aufweisen, in der sich zusätzlich Wasser ansammeln kann, um die Öffnung zu bedecken. In der Öffnung kann weiterhin ein Magnetventil angeordnet sein, welches in einem Wasserablaufvorgang geöffnet wird.

Das Gehäuse könnte im Bereich der Bodenplatte einen ersten Abschnitt aufweisen, der sich mit einer im Wesentlichen konstanten Querschnittsfläche in Richtung des Gasanschlusses erstreckt. Der erste Abschnitt bildet folglich ein zylindrisches oder quaderförmiges Volumen aus, das eine größtmögliche Querschnittsfläche aufweist. Der erste Abschnitt erstreckt sich nur über einen Teil der Bauhöhe des Wasserabscheiders. In diesem ersten Abschnitt ist eine geringste Pegelanstiegsgeschwindigkeit bzw. eine niedrigste Pegelsinkgeschwindigkeit zu erwarten. Der erste Abschnitt beinhaltet bevorzugt auch den Bereich direkt angrenzend an die Bodenplatte bzw. direkt oberhalb der Bodenplatte, so dass der Ablauf stets Wasser aus diesem ersten Abschnitt ableitet.

In einer vorteilhaften Ausführungsform weist das Gehäuse zwischen der Bodenplatte und dem Gaseingang einen zweiten Abschnitt auf, der im Wesentlichen sattel-, keil-, kegel- oder umgekehrt trichterförmig ausgebildet ist. Dort erfolgt eine Verjüngung, so dass mit kontinuierlichem Volumenstrom an eingehendem Wasser eine steigende Pegelanstiegsgeschwindigkeit bzw. Pegelsinkgeschwindigkeit zu erwarten ist. In einem besonders einfachen Fall können die in dem zweiten Abschnitt vorliegenden seitlichen Wandungen bzw. Wand- oder Mantelflächen einen zu dem Gasanschluss geradlinigen Verlauf aufweisen, so dass sie einen konstanten Winkel zu der Bodenplatte einschließen. Es ist beispielhaft vorstellbar, dass die Bodenplatte und die Wandungen einen Winkel von nicht mehr als 60°, in einer Ausführungsform einen Winkel von nicht mehr als 45° und in einer anderen Ausführungsform von nicht mehr als 25° einschließen.

Der Wasserabscheider könnte ferner ein Strömungsberuhigungselement aufweisen, das in einem Abstand von der Bodenplatte in dem Gehäuse angeordnet ist und einen lokalen Querschnitt des Gehäuses überspannt. Das Strömungsberuhigungselement dient dazu, Gasströmungen im Innern des Gehäuses auf eine solche Weise zu beruhigen, dass das bereits in dem Wasserabscheider vorhandene Wasser nicht aus einem räumlichen Bereich um den Ablauf herum weggespült wird, sondern dort verbleibt und das Ausströmen eines Gases aus dem Ablauf verhindert. Das Strömungsberuhigungselement könnte sich beispielsweise über den gesamten Querschnitt des Gehäuses erstrecken, so dass alle aus dem Gasanschluss zu der Bodenplatte hin gerichtete Strömungen zuverlässig beruhigt werden können.

Das Strömungsberuhigungselement könnte eine Lochplatte oder ein poröser Schaum oder eine Honigwabenstruktur sein, die parallel zu der Bodenplatte angeordnet ist. Die Lochplatte ist als ebenes Bauteil zu verstehen, das eine Vielzahl von Bohrungen aufweist. Die Bohrungen können in einem gleichmäßigen Raster oder ungleichmäßig über die Lochplatte verteilt sein. Dies kann von den Strömungsformen des eintreffenden Gases abhängig gemacht werden. Die Lochplatte könnte als metallisches Blech oder durch ein Kunststoffteil realisiert werden.

Das Strömungsberuhigungselement könnte den ersten Abschnitt begrenzen. Damit wird insbesondere in dem ersten Abschnitt die aufgenommene Wassermenge beruhigt und starke Strömungen sowie die Bildung einer 2-Phasenmischung bzw. 2-Phasenströmung (Gas und Flüssigkeit) in einem Bereich um den Ablauf werden verhindert.

Der Wasserabscheider könnte ferner mehrere Schwallbleche aufweisen, die quer zu der Bodenplatte angeordnet sind und jeweils mindestens eine Durchströmöffnung aufweisen oder mit der Bodenplatte mindestens eine Durchströmöffnung einschließen. Die Schwallbleche dämpfen starke Schwappbewegungen des Wassers in dem Wasserabscheider bei Bewegungen des Wasserabscheider bzw. des Flugzeugs, in das ein solcher Wasserabscheider integriert ist. Das Wasser kann mittels der Durchströmöffnungen zwar weiterhin innerhalb des Gehäuses fließen, wird jedoch hierdurch in seiner Dynamik begrenzt. Es ist denkbar, die Durchströmöffnungen alle auf derselben Höhe von der Bodenplatte aus anzuordnen, oder auf verschiedenen Höhen. Es bietet sich insbesondere an, die Durchströmöffnungen möglichst unmittelbar über der Bodenplatte anzuordnen. Sie können als einzelne Bohrungen oder Ausschnitte realisiert sein, die sich entlang der Bodenplatte bzw. der Schwallbleche verteilen. Die Schwallbleche können als metallische Bleche oder als Kunststoffteile realisiert werden. Sie können mit dem Lochblech ein integrales Bauteil bilden. Auch für die Schwallbleche könnte alternativ ein Schaum oder eine Honigwabenstruktur eingesetzt werden.

In einer weiter vorteilhaften Ausführungsform weist der Wasserabscheider ferner einen Pegelsensor zur Kopplung mit einem Drainageventil auf, wobei der Pegelsensor in einer Position des Gehäuses angeordnet ist, an der eine lokale Querschnittsfläche kleiner als eine Querschnittsfläche der Bodenplatte ist. Es ist vorstellbar, dass an der Einbauposition des Pegelsensors die dortige Querschnittsfläche halb so groß oder kleiner ist als die Querschnittsfläche der Bodenplatte. Der Pegelsensor könnte an einer stark verjüngten Querschnittsfläche angeordnet sein, um zuverlässig den gewünschten Maximalpegel zu detektieren. Der Pegelsensor könnte insbesondere als ein Ultraschallpegelsensor ausgeführt sein.

Die Erfindung betrifft ferner ein Brennstoffzellensystem, aufweisend mindestens eine Brennstoffzelle und mindestens einen Wasserabscheider nach der vorhergehenden Beschreibung. Eine Kathodenabgasleitung oder Kathodengasrezirkulationsleitung und auch eine Anodenabgasleitung oder Anodengasrezirkulationsleitung könnte mit dem Wasserabscheider in Fluidverbindung gebracht werden. Das bei dem Brennstoffzellenprozess anfallende Wasser kann dann für andere Zwecke gesammelt und verbraucht werden.

Die mindestens eine Brennstoffzelle könnte insbesondere eine PEM-Brennstoffzelle sein. Derartige Brennstoffzellen sind technisch weit entwickelt und können große elektrische Leistungen in einem moderaten Temperaturniveau bereitstellen.

Die Erfindung betrifft weiterhin ein Fahrzeug, aufweisend mindestens ein solches Brennstoffzellensystem. Das Fahrzeug kann insbesondere ein Luftfahrzeug sein und bevorzugt ein Verkehrsflugzeug. Der Wasserabscheider kann für diverse Zwecke das abgeschiedene Wasser einsetzen, so dass es nicht separat mitgeführt werden muss.

Der Gaseingang ist bevorzugt in vertikaler Richtung oder seitwärts oberhalb des Pegelsensors angeordnet und das Gehäuse verjüngt sich nach oben hin. Der Wasserabscheider ist folglich direkt unterhalb einer Abgasquelle angeordnet und erlaubt die schwerkraftbedingte Ableitung von Wasser.

Der Ablauf könnte an einer tiefsten Stelle des Wasserabscheiders angeordnet sein. Damit wird sichergestellt, dass der Ablauf stets von Wasser bedeckt bleibt.

Ein Drainageventil könnte mit dem Ablauf in Fluidverbindung stehen und mit dem vorangehend genannten Pegelsensor gekoppelt sein. Bei Erreichen der vorbestimmten Maximalpegels könnte das Drainageventil öffnen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 und 2 zeigen einen Wasserabscheider in einem Seitenschnitt.
Fig. 3 zeigt ein Brennstoffzellensystem mit einem derartigen Wasserabscheider für den Betrieb mit Wasserstoff und Sauerstoff.
Fig. 4 zeigt ein weiteres Brennstoffzellensystem mit einem derartigen Wasserabscheider für den Betrieb mit Wasserstoff und Luft.
Fig. 5 zeigt ein Flugzeug, das ein Brennstoffzellensystem mit einem solchen Wasserabscheider aufweist.

### DETAILLIERTE DARSTELLUNG EXEMPLARISCHER AUSFÜHRUNGSFORMEN

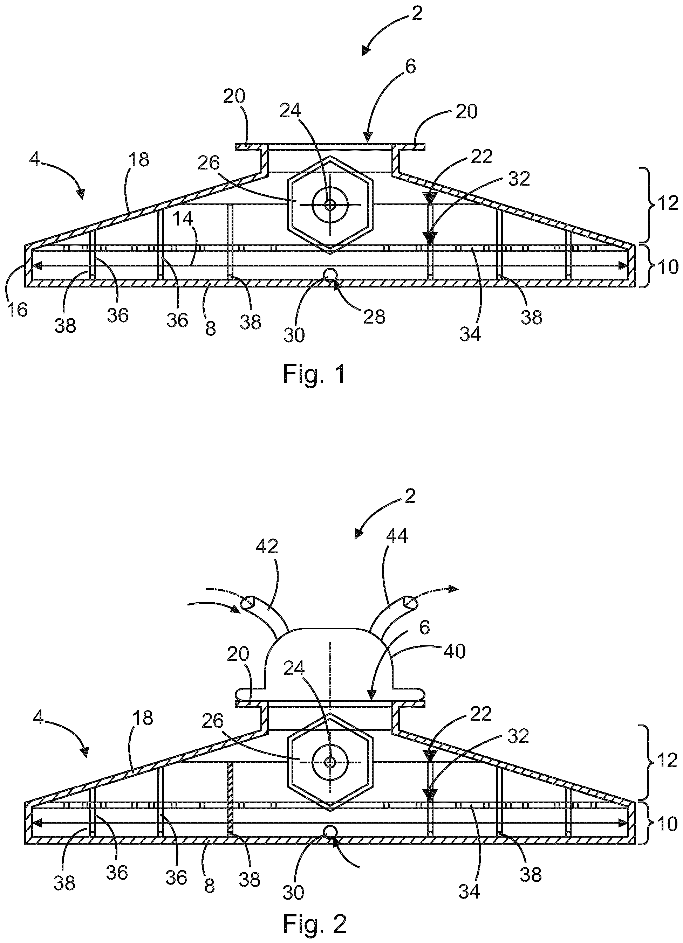

Fig. 1 zeigt einen Wasserabscheider 2 für ein Brennstoffzellensystem in einem Seitenschnitt. Der Wasserabscheider 2 kann rotationssysmmetrisch ausgebildet sein, so dass die Darstellung als Mittelschnitt anzusehen ist. Alternativ dazu kann der Wasserabscheider 2 jedoch auch durch nichtrunde Körper ausgebildet sein und vertikal zu der Zeichnungsebene mit gleichförmigem Querschnitt verlängert sein.

Der Wasserabscheider 2 weist ein geschlossenes Gehäuse 4 mit einem Gasanschluss 6 und einer vom Gasanschluss 6 abgewandt angeordneten Bodenplatte 8 auf. Dieses bildet einen ersten Abschnitt 10 und einen darüber liegenden zweiten Abschnitt 12 aus. In dem ersten Abschnitt 10 ist eine lichte Weite 14, d.h. die im Innern des Gehäuses 4 vorliegende Breite des Gehäuses 4, konstant und im Vergleich mit dem zweiten Abschnitt 12 maximal. In dem zweiten Abschnitt 12, der sich zwischen dem ersten Abschnitt 10 und dem Gasanschluss 6 befindet, sinkt die lichte Weite 14 in Richtung des Gasanschlusses 6 kontinuierlich. In dem gezeigten Ausführungsbeispiel weist das Gehäuse 4 hierzu in dem ersten Abschnitt 10 Wandflächen 16 auf, die exemplarisch vertikal zu der Bodenplatte 8 angeordnet sind. Von den Wandflächen 16 erstrecken sich schräge Deckflächen 18 zu dem Gasanschluss 6 hin. Diese schließen beispielhaft einen Winkel von ungefähr 16° mit der Bodenplatte 8 und erstrecken sich exemplarisch entlang einer geraden Linie. Der Gasanschluss 6 wird beispielhaft durch einen Flansch mit Auskragungen 20 gebildet, an dem eine gasleitende Komponente anschraubbar ist.

Die Bodenplatte 8 weist im Beispiel eine Breite auf, die mehr als doppelt so groß ist, wie die Höhe des Gehäuses 4 von der Bodenplatte 8 bis zu dem äußeren Ende des Gasanschlusses 6. In dem gezeigten Ausführungsbeispiel ist der Wasserabscheider 2 mehr als viermal so breit wie hoch. Hierdurch ergibt sich demnach ein recht flacher Aufbau. Durch die sich verjüngende Form des Gehäuses 4 von der Bodenplatte 8 in Richtung des Gasanschlusses 6 steigt der Wasserpegel in dem ersten Abschnitt 10 zunächst gleichmäßig an, während dessen Anstiegsgeschwindigkeit in dem zweiten Abschnitt 12 mit zunehmendem Pegel steigt. An einem vorbestimmten Maximalpegel 22, der deutlich in den zweiten Abschnitt 12 auf etwas mehr als der halben Höhe des zweiten Abschnitts 12 liegen kann, ist ein Pegelsensor 24 angeordnet. Dieser kann ein Ultraschallsensor sein und ist exemplarisch über eine Sechskantschraube 26 in das Gehäuse 4 eingeschraubt. Sobald der Wasserpegel den vorbestimmten Maximalpegel 22 erreicht, wird von dem Pegelsensor 24 ein Signal generiert. Dieses kann etwa zum Öffnen eines Ventils genutzt werden, um Wasser aus dem Gehäuse 4 abzuführen. In der Bodenplatte 8 ist ferner ein Ablauf 28 vorgesehen, der mit einem Magnetventil 30 geschlossen wird. Zum Öffnen des Ablaufs 28 wird das Magnetventil 30 geöffnet, was beispielsweise durch ein Signal des Pegelsensors 24 initiiert werden kann.

Um zu verhindern, dass Gas, das in das Innere des Gehäuses 4 gelangt, über den Ablauf 28 aus dem Wasserabscheider 2 austritt, ist ein Mindestpegel 32 an Wasser in dem Gehäuse 4 gewünscht. Dieser liegt exemplarisch ungefähr an einem Übergang zwischen dem ersten Abschnitt 10 und dem zweiten Abschnitt 12. Dort ist weiterhin ein Strömungsberuhigungselement 34 in Form einer Lochplatte angeordnet. Dieses kann auch ein beispielsweise flächig ausgeführter, poröser Schaum sein. Alternativ dazu ist auch eine Honigwabenstruktur denkbar. Das Strömungsberuhigungselement 34 verläuft parallel zu der Bodenplatte 8 und kann starken bzw. prägnanten Strömungserscheinungen entgegenwirken. Die Strömung insbesondere an dem Ablauf 28 kann dadurch beruhigt werden, was das Verhindern des Austritts von Gas aus dem Ablauf 28 unterstützt.

Quer zu der Bodenplatte 8 sind weiterhin mehrere Schwallbleche 36 mit Durchströmöffnungen 38 vorgesehen, die sich im Wesentlichen von der Bodenplatte 8 in Richtung des Gasanschlusses 6 erstrecken. Sie enden beispielhaft auf Höhe des Maximalpegels 22. Bei starken lateralen Bewegungen des Wasserabscheiders 2 können Schwappbewegungen des aufgenommenen Wassers verhindert bzw. reduziert werden. Auch dies kann die Strömung im Bereich des Ablaufs 28 so beruhigen, dass ein Austreten von Gasen verhindert werden kann.

In Fig. 2 wird im Wesentlichen dasselbe Ausführungsbeispiel des Wasserabscheiders 2 gezeigt. Hier ist an dem Flansch 20 eine Art Deckel 40 angeordnet, der einen Gaseinlass 42 und einen Gasauslass 44 aufweist. Gas, das über den Gaseinlass 42 in den Wasserabscheider 2 einströmt, kann Wasser abgeben und durch den Gasauslass 44 wieder aus dem Wasserabscheider 2 austreten.

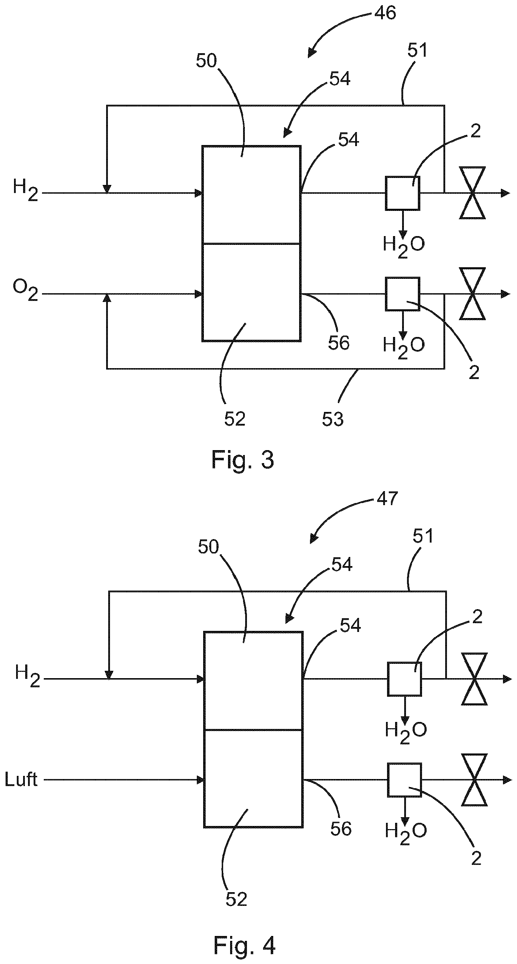

Fig. 3 zeigt ein Brennstoffzellensystem 46 mit einer Brennstoffzelle 48, die eine Anode 50 und eine Kathode 52 aufweist. Der Anode 50 wird Wasserstoff zugeführt, der Kathode 52 Sauerstoff. Sowohl der Anode 50 als auch der Kathode 52 ist ein Wasserabscheider 2 nachgeschaltet. Beide Wasserabscheider 2 stehen in Fluidverbindung mit einem Ausgang 54 bzw. 56 der Anode bzw. Kathode und können jeweils Wasser abgeben. Sowohl der Anode 50 als auch der Kathode 52 ist eine Rezirkulationsleitung 51 bzw. 53 nachgeschaltet. Die Wasserabscheider 2 sind den jeweiligen Rezirkulationsleitungen 51 und 53 vorgeschaltet.

Fig. 4 zeigt ein Brennstoffzellensystem 47, das ebenso eine Brennstoffzelle 48 aufweist. Der Anode 50 und der Kathode 52 ist jeweils ein Wasserabscheider 2 nachgeschaltet. Der Unterschied zu dem Brennstoffzellensystem 46 aus Fig. 3 liegt darin, dass die Kathode 52 mit Luft versorgt wird. Eine Rezirkulationsleitung 53 fehlt daher.

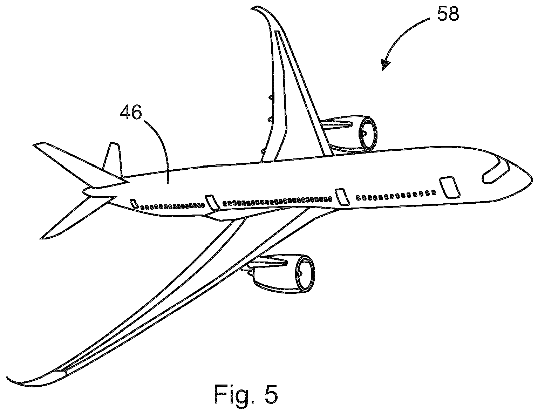

Schließlich zeigt Fig. 5 ein Flugzeug 58, in das ein derartiges Brennstoffzellensystem 46 eingebaut sein kann.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Wasserabscheider
- 4: Gehäuse
- 6: Gasanschluss
- 8: Bodenplatte
- 10: erster Abschnitt
- 12: zweiter Abschnitt
- 14: lichte Weite
- 16: Wandfläche
- 18: Deckfläche
- 20: Auskragung
- 22: Maximalpegel
- 24: Pegelsensor
- 26: Schraube
- 28: Ablauf
- 30: Ventil, Magnetventil
- 32: Mindestpegel
- 34: Strömungsberuhigungselement
- 36: Schwallblech
- 38: Durchströmöffnung
- 40: Deckel
- 42: Gaseinlass
- 44: Gasauslass
- 46: Brennstoffzellensystem
- 47: Brennstoffzellensystem
- 48: Brennstoffzelle
- 50: Anode
- 51: Rezirkulationsleitung
- 52: Kathode
- 53: Rezirkulationsleitung
- 54: Ausgang
- 56: Ausgang
- 58: Flugzeug/Fahrzeug

## Patentansprüche

1. Wasserabscheider (2) für ein Brennstoffzellensystem (46), aufweisend ein geschlossenes Gehäuse (4) mit einem Gasanschluss (6) und einer vom Gasanschluss (6) abgewandt angeordneten Bodenplatte (8) mit einem Ablauf (28), wobei sich eine lichte Weite (14) des Gehäuses von der Bodenplatte (8) zu dem Gasanschluss (6) hin zumindest abschnittsweise verringert und wobei die Höhe des Gehäuses (4) die größte lichte Weite (14) des Gehäuses (4) unterschreitet.

2. Wasserabscheider (2) nach Anspruch 1, wobei das Gehäuse (4) im Bereich der Bodenplatte (8) einen ersten Abschnitt (10) aufweist, der sich mit einer im Wesentlichen konstanten Querschnittsfläche zu dem Gasanschluss (6) hin erstreckt.

3. Wasserabscheider (2) nach Anspruch 1 oder 2, wobei das Gehäuse (4) zwischen der Bodenplatte (8) und dem Gasanschluss (6) einen zweiten Abschnitt (12) aufweist, der im Wesentlichen sattel-, keil-, kegel- oder umgekehrt trichterförmig ausgebildet ist.

4. Wasserabscheider (2) nach einem der vorhergehenden Ansprüche, ferner aufweisend ein Strömungsberuhigungselement (34), das in einem Abstand von der Bodenplatte (8) in dem Gehäuse (4) angeordnet ist und einen lokalen Querschnitt des Gehäuses (4) überspannt.

5. Wasserabscheider (2) nach Anspruch 4, wobei das Strömungsberuhigungselement (34) eine Lochplatte, ein poröser Schaum oder eine Honigwabenstruktur ist, die parallel zu der Bodenplatte (8) angeordnet ist.

6. Wasserabscheider (2) nach Anspruch 2 und 4 oder 5, wobei das Strömungsberuhigungselement (34) den ersten Abschnitt (10) begrenzt.

7. Wasserabscheider (2) nach einem der vorhergehenden Ansprüche, ferner aufweisend mehrere Schwallbleche (36), die quer zu der Bodenplatte (8) angeordnet sind und jeweils mindestens eine Durchströmöffnung (38) aufweisen oder mit der Bodenplatte (8) mindestens eine Durchströmöffnung (38) einschließen.

8. Wasserabscheider (2) nach einem der vorhergehenden Ansprüche, ferner aufweisend einen Pegelsensor (24) zur Kopplung mit einem Ventil (30), wobei der Pegelsensor (24) in einer Position des Gehäuses (4) angeordnet ist, an der eine lokale Querschnittsfläche kleiner ist als eine Querschnittsfläche der Bodenplatte (8).

9. Brennstoffzellensystem (46), aufweisend mindestens eine Brennstoffzelle (48) und mindestens einen Wasserabscheider (2) nach einem der vorhergehenden Ansprüche.

10. Brennstoffzellensystem (46) nach Anspruch 9, wobei die mindestens eine Brennstoffzelle (48) eine PEM-Brennstoffzelle ist.

11. Fahrzeug, aufweisend mindestens ein Brennstoffzellensystem (46) nach Anspruch 9 oder 10.

12. Fahrzeug (58) nach Anspruch 11, wobei der Gasanschluss (6) in vertikaler Richtung oder seitwärts oberhalb des Pegelsensors (24) angeordnet ist und sich das Gehäuse (4) nach oben hin verjüngt.

13. Fahrzeug nach Anspruch 11 oder 12, wobei der Ablauf (28) an einer tiefsten Stelle des Wasserabscheiders (2) angeordnet ist.

14. Fahrzeug nach einem der Ansprüche 11 bis 13, wobei ein Drainageventil mit dem Ablauf in Fluidverbindung steht.
